# EUROPEAN PATENT SPECIFICATION

(11) **EP 3 703 526 B1**
(45) Date of publication and mention of the grant of the patent: **26.06.2024**
(21) Application number: 18795654.5
(22) Date of filing: 31.10.2018
(51) Int. Cl.: A43B 13/18, A43B 17/02, B33Y 80/00

(54) **DAMPING ELEMENT AND METHOD FOR MODELING THE SAME**
DÄMPFUNGSELEMENT UND VERFAHREN ZUR MODELLIERUNG DAVON
ÉLÉMENT AMORTISSEUR ET SON PROCÉDÉ DE MODÉLISATION

(30) Priority: 03.11.2017 EP 17306516
(43) Date of publication of application: 09.09.2020
(73) Proprietor: Allado, Edem, 77550 Moissy-Cramayel (FR)
(72) Inventor: Allado, Edem, 77550 Moissy-Cramayel (FR)
(74) Representative: Icosa
(86) International application number: PCT/EP2018/079888
(87) International publication number: WO 2019/086546

(56) References cited:
- WO-A1-2014/009587
- DE-A1-102016 124 724
- GB-A- 2 508 204
- US-A1- 2016 374 431

## Description

### FIELD OF INVENTION

The present invention pertains to the field of insoles for shoes. In particular, the invention relates to a damping element intended to be part of an insole, an insole comprising at least one damping element, and a method for modeling a damping element for an insole.

### BACKGROUND OF INVENTION

Insoles are known for the proprioceptive, exteroceptive, pressoceptive and/or reflexogenic stimulation, in particular for correcting musculoskeletal, myofascial and/or vascular disorders of the sole of the foot.

Today, insoles are mostly produced by podiatrists.

It is known orthopedic insoles comprising at least one interlayer element. The interlayer element is made of a material having specific properties due to the capability of said interlayer element to be compressed and to return absorbed energy. For example, said material can be rubber, cork or resin. In order to provide an interlayer element having desired mechanical properties, it is needed to combine at least two different materials to reach the targeted properties.

This production is artisanal, not standardized and requires a duration of about 45 minutes. The manufacturing of the interlayer element requires chemicals (adhesive, solvent, etc.), and the process itself, through the use of milling machines, creates exposure to different toxicants. It is also necessary to use several different materials in order to obtain an important range of mechanical properties for example in terms of damping, propulsion or absorption. Moreover, since the design of the interlayer element is most often carried out by subtractive manufacturing processes, there are losses of about 25% of the material boards.

A sole or insole is known from DE102016124724. Said sole comprises a support structure and insertion elements manufactured by a 3D printer. The support structure comprises hexagonal openings and spaces for receiving insertion elements. This document further describes a three-dimensional scan of a footprint analyzed by a software to generate the sole profile.

A drawback of the sole described in said document is that the podiatrist does not fully control the sole profile, which leads to realize a corrective element comprising a design which has to be precisely adapted to each sole. Furthermore, the sole comprises in its whole surface a damping material, which is not efficient for certain applications such as palliative applications.

An insole is also known from WO 2014/009587 A1. The insole disclosed in this patent application comprises a body having a reticular structure delimited by an inferior surface and a superior surface. In WO 2014/009587 A1, the body is configured to constitute by itself an insole and therefore extends over the whole surface intended to be in contact with a foot of a subject, without the possibility to finely adapt the mechanical properties of the insole at each location.

There is therefore a need to provide a new insole, or element of an insole, which is easier to manufacture, optimizes the number of different materials that are used, makes it possible to efficiently reach the targeted properties of the insole and reduces the risk for the manufacturer to generate toxic components during the manufacturing of said insole.

### SUMMARY

In this context, a first subject of the invention is a method for manufacturing an insole as defined in claim 1.

An advantage of the present invention is to provide a damping element optimizing the fixation of a meshed structure with at least one insole layer increasing the contact surface.

Furthermore, the meshed structure makes it possible to easily and finely adjust the mechanical properties of a damping element so as to reach specific properties of an insole, especially in terms of geometry and hardness of the insole. The configuration of the meshed structure provides additional parameters which can be adjusted to define specific mechanical properties of the damping element and the insole.

Thanks to the invention, it is possible to easily and efficiently manufacture an insole having a targeted hardness profile, each damping element providing a desired hardness at the specific location of the insole where the damping element is intended to be integrated. The hardness of each damping element defines the capacity of the insole to deform plastically at the location of the damping element. With the use of damping elements having targeted and controlled hardness profiles, the evolution of the hardness of the insole can be adjusted at each location of a damping element.

In particular, based on data of a scan of a foot of a subject, it is possible to define a targeted geometry and hardness profile of an insole. Locally, a specific targeted geometry of the insole can be obtained with the first and second structures of the damping element, while the targeted hardness profile of the insole can be obtained with the meshed structure of the damping element occupying the interior volume defined between the first and second structures and mechanically connected to the first and second structures so as to be integral therewith. Thus, the invention makes it possible to control the plastic deformation of the insole over time in a local manner such that, in an early stage of use of the insole by a subject, the insole can deform and adapt to a morphology and mobility of the subject and then, in a further stage of use of the insole by the subject, the insole can retain a specific deformed configuration adapted to the subject.

A further advantage of using one or more damping elements at specific locations of the insole is that such a structure of the insole is more resistant to damages of the meshes structure than an insole comprising a damping element over its whole surface.

In one embodiment, the hardness of the meshed structure is in a range from 20 to 100 shore A, preferably from 30 to 100 shore A, preferably from 30 to 70 shore A, preferably from 40 to 70 shore A, in an uncompressed or de-energized state of the meshed structure. Within the meaning of the invention, an uncompressed or de-energized state of the meshed structure may be, in particular, a state of the meshed structure as obtained after its manufacturing, without any load being applied thereto.

In one embodiment, the meshed structure is made by 3D printing. For example, an additive method or a selective laser sintering may be used in the scope of the invention. In one embodiment, the meshed structure, the first structure and the second structure are made by 3D printing.

By making the meshed structure by 3D printing, the podiatrist is advantageously not exposed to the toxicants generated by the use of chemicals for combining different materials or by subtractive manufacturing processes. Furthermore, in this case it is possible to use only one material while reaching a wide range of mechanical properties.

In one embodiment, the first structure, the second structure and the meshed structure are made of the same material, such as an elastomer. In one embodiment, the first structure, the second structure and the meshed structure are a monobloc part made of one and the same material.

The 3D printing allows defining a one-piece design in which the first and the second structures are shaped for cooperating with the surfaces of an insole.

In one embodiment, the meshed structure comprises a network defined by a geometric form, said geometric form being rectilinear walls forming right angles.

In one embodiment, the meshed structure comprises a network comprising hexagonal meshes.

The first structure and/or the second structure of the damping element are configured to be fixed to the first inferior layer and/or the second superior layer. Then, the efficiency and the durability of the insole is improved.

In one embodiment, the first structure is fixed to the first inferior layer. In one embodiment, the second structure is fixed to the second superior layer. In one embodiment, the inferior surface is fixed to the first inferior layer. In one embodiment, the superior surface is fixed to the second superior layer.

In one embodiment, the first structure is adhered to the first inferior layer. In one embodiment, the second structure is adhered to the second superior layer. In one embodiment, the inferior surface is adhered to the first inferior layer. In one embodiment, the superior surface is adhered to the second superior layer.

In one embodiment, the first inferior layer comprises a thermoplastic resin.

In one embodiment, the second superior layer comprises a superior surface intended to be in contact with a foot of a user. Said superior surface can comprise plastic material or leather.

In one embodiment, said at least one parameter is also determined at least in part from the thickness of the first sheet and/or from the thickness of the second sheet of the first three-dimensional structure.

In one embodiment, the at least one parameter is also determined at least in part from the space between the first sheet and the second sheet of the first three-dimensional structure.

In one embodiment, the geometric data comprise:
- a geometric shape in two dimensions of the first sheet and/or of the second sheet of the first three-dimensional structure; and/or
- a thickness of the damping element to be modeled in at least one point; and/or
- a slope of the second sheet with respect to the first sheet.

In one embodiment, the set of information is received by means of a user interface.

One advantage for the podiatrist is the possibility to enter directly information concerning the insole to be manufactured. Thanks to the user interface, the podiatrist can control and choose exactly the geometric data of the damping element.

In another embodiment, the method comprises the step of printing a damping element for an insole comprising the steps of:
- converting said three-dimensional model into a file readable by a 3D printer;
- printing the damping element from the file comprising the three-dimensional model.

### DEFINITIONS

In the present invention, the following terms have the following meanings:
- **"Superior",** refers to closer to the foot of a user when said user is wearing a shoe comprising the insole and/or the damping element according to the present invention.
- **"Inferior",** refers to closer to the outside sole of the shoe when a user is wearing said shoe comprising the insole and/or the damping element according to the present invention.
- **"Insole",** refers to a sole intended to be placed in the interior part of a shoe to support the foot of a user.
- **"3D printing",** refers here to any process used to create a three-dimensional object in which layers of material are formed under computer control. This term encompasses all additive manufacturing processes among, but not limited to: binder jetting, directed energy deposition, material extrusion, material jetting, powder bed fusion, sheet lamination, selective laser sintering and vat photopolymerization. Therefore, the term "3D printer" also relates to any device for additive manufacturing processes, including selective laser sintering device.
- **"Sheet",** refers here to a three-dimensional part having a thickness much smaller than its length and width. In one embodiment the ratio width / thickness and/or the ratio length / thickness of the sheet are superior to 5, or superior to 10, or superior to 100.
- **"Adhesive",** refers here to any substance applied to one surface, or both surfaces, of two separate items, that binds them together and resists to their separation.
- **"Hardness",** refers to the resistance of a material to localized surface deformation. Hardness is influenced by the local structure of the material at the elasto-plastic transition and during subsequent plastic straining.

### BRIEF DESCRIPTION OF THE DRAWINGS

The figures show elements designed by the manufacturing method according to the invention.
**Figure 1** is a perspective view of a damping element according to one embodiment of the invention.
**Figure 2A** is a perspective view of a damping element according to one embodiment of the invention, wherein at least a portion of the superior surface of the damping element exhibits a slope with respect to the inferior surface.
**Figure 2B** is a perspective view of a damping element according to one embodiment of the invention, wherein the superior surface of the damping element exhibits a slope with respect to the inferior surface.
**Figure 2C** is a cross section of a damping element according to one embodiment of the invention, wherein the superior surface is convex.
**Figure 2D** is a cross section of a damping element according to one embodiment of the invention, wherein the superior surface comprises a concave portion and a convex portion.
**Figure 2E** is a cross section of a damping element according to one embodiment of the invention, wherein the superior surface comprises a concave portion surrounded by two convex portions.
**Figure 3** and **Figure 4** are drawings showing a mesh of the network of the meshed structure of a damping element according to one embodiment of the invention.
**Figure 5** and **Figure 6** are drawings showing a network configuration of the meshed structure of a damping element according to one embodiment of the invention.
**Figure 7** is a drawing of the inferior surface or of the superior surface of a damping element according to one embodiment of the invention.
**Figure 8** is a schematic exploded view of an insole according to one embodiment of the invention.
**Figure 9** is a drawing showing possible locations and shapes of the at least one damping element in an insole according to one embodiment of the invention.
**Figures 10A, 10B** and **10C** are drawings showing embodiments of possible meshes of the network of the meshed structure of a damping element according to the invention.

### DETAILED DESCRIPTION

The following detailed description will be better understood when read in conjunction with the drawings. For the purpose of illustrating, the damping element and the insole are shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

By "podiatrist", it should be understood that the term may include any user or any person intended to manufacture a damping element or an insole according to the present invention.

According to a first aspect, the present invention relates to a method for manufacturing an insole **7** comprising at least two damping elements **1.**

In one embodiment, the damping element **1** is intended to be positioned between two layers of an insole **7.** In one embodiment, the insole **7** is incorporated in a predefined sole of a shoe. In another embodiment, the insole **7** is an external insole that can be introduced in at least one shoe. One advantage of the invention is that it may be applied to a predefined shoe or an insole which is intended to be arranged in a shoe.

The damping element **1** comprises a first structure **2** and a second structure **4,** forming respectively an inferior surface **3** and a superior surface **5.**

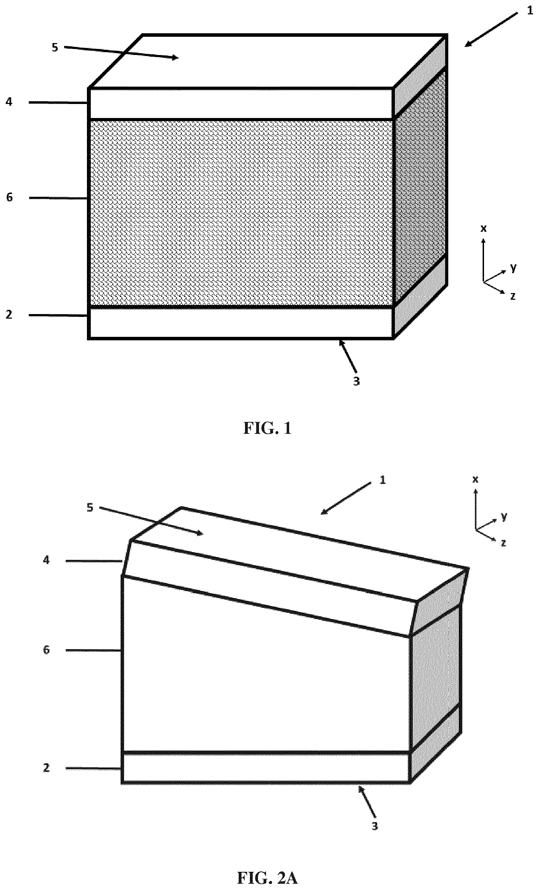

The damping element **1** illustrated in **Fig. 1** and **Fig. 2A** further comprises a meshed structure **6** comprised in a region arranged between the inferior surface **3** and the superior surface **5.** In one embodiment, the first structure **2,** the second structure **4** and the meshed structure **6** are designed in a same monobloc part.

In one embodiment, the damping element **1** is an interlayer element comprising a material showing specific damping properties. In one embodiment, the damping properties comprise at least one of the following properties: {elastic modulus, maximum deformation before mechanical break, creep coefficient, etc.}. In one embodiment, the thickness and the material of a damping element are designed so that the damping element is resistant, without any plastic deformation appearing, for an applied mechanical constraint ranging from 10 kg to 250 kg, or ranging from 50 kg to 100 kg.

In one embodiment, at least one damping property of the damping element and its location relative to the layers of the insole allow stimulating a specific muscle in the body.

In one embodiment, the meshed structure **6** is a succession of a first material and a second material or a succession of a first material and a fluid.

In one embodiment, the first material has a first hardness and a first density, and the second material has a second hardness significantly different from the first hardness or the fluid has a second density significantly different from the first density.

In said embodiment, by modifying the ratio between the first and the second hardness or between a first and the second density, it is possible to provide a meshed structure **6** having a configurable hardness or a configurable density.

In one embodiment, the difference between the hardness values associated to the first and second materials is used to produce a customized meshed structure **6** having a desired hardness and/or a desired density.

In one embodiment, the difference between the density values associated to the first and second materials is used to produce a customized meshed structure **6** having a desired hardness and/or a desired density.

The final configurable hardness is comprised between the first hardness and the second hardness when the meshed structure **6** is made of two materials. The final configurable density of the meshed structure **6** is comprised between the first density and the second density when the meshed structure **6** is made of one material and one fluid.

The more the gap between the hardnesses of the first and second materials is high, the more the range of possible hardness for the meshed structure **6** is wide.

In one preferred embodiment, the fluid is air. The volume of air comprised in the meshed structure may be at the atmospheric pressure, for example when the meshed structure **6** comprises opened lateral sides. In another example, when the meshed structure **6** comprises closed lateral sides, the pressure of the volume of air in the closed meshed structure may be controlled.

In one embodiment, the first material comprises a plastic elastomer, preferably a thermoplastic elastomer.

In one embodiment, the meshed structure **6** is a three-dimensional network **11** comprising an array of three-dimensional meshes. One mesh may be understood as a 3D pattern surrounded in a geometric form. In one embodiment, the network is defined by a 3D pattern and a geometric form and the identified nodes as connectors between adjacent 3D patterns. A 3D pattern may also be called a microstructure in the following description.

The selection of a predefined 3D pattern may automatically be configured with a calculator of a computer in order to ensure a predefined constraint resistance or a predefined damping property of the damping element. In one embodiment, the computer may simulate, for example, the damping element when it is subjected to mechanical constraints. The simulation allows, for example, determining an optimized mesh that can be implemented in the damping element.

In one embodiment, the optimized mesh comprises the optimization of a selection of a 3D pattern from a predefined 3D patterns library, a selection of a geometric form from a predefined geometric forms library and for instance a selection of a predefined filling rate in a predefined range. The filling rate refers to the ratio between the volume occupied by the meshed structure **6,** comprising nodes and connections, and the volume in between the meshed structure **6.** Said filling ratio is one of the parameters that contribute to determining the hardness of the meshed structure **6.**

In one embodiment, the mesh comprises nodes **13** and connections **15** extending between nodes. In one embodiment said mesh is made of a unique first material **16.**

The arrangement of connections **15** between nodes **13,** defines a type of mesh. In the following description some examples of types of mesh are described, the invention not being limited to these examples.

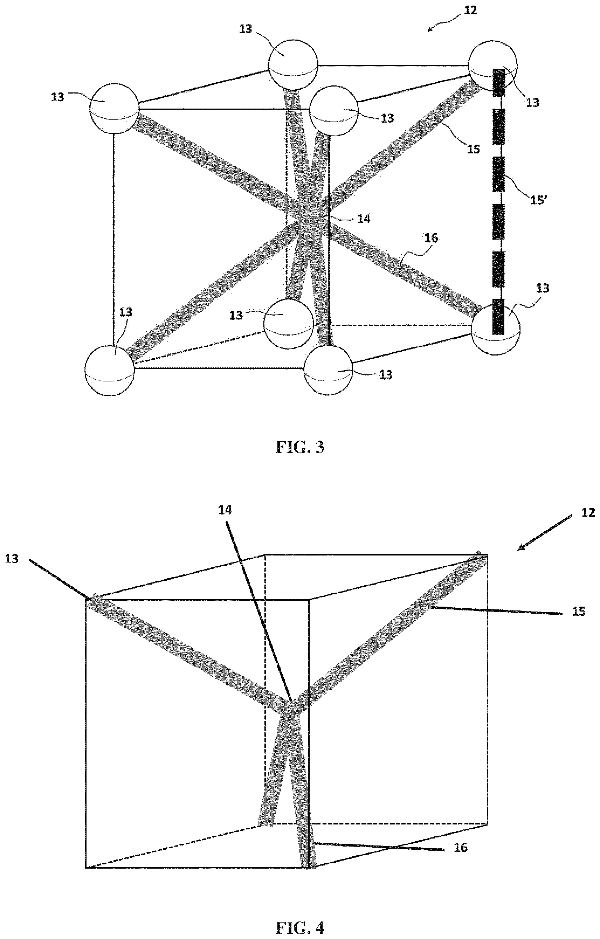

In one embodiment, illustrated in **Fig. 3****,** a mesh of the network is visualized in a rectangular parallelepiped. Each corner **13** of the rectangular parallelepiped is a node of the three-dimensional meshed structure **6.** In one embodiment, corners **13** are specific nodes which are on the surface of the geometric form. For example, the node **14** is not considered as a corner. In one embodiment, the center **14** of the rectangular parallelepiped is also a node of the network. In **Fig. 3****,** the center of the parallelogram **14** is not represented as a node.

In one embodiment, each corner **13** of the rectangular parallelepiped comprises the first material **16** and the center **14** of the rectangular parallelepiped also comprises the first material **16.** In one embodiment, each corner **13** of the rectangular parallelepiped is connected to center **14** by a connection **15** comprising the first material **16.**

In one embodiment (non-illustrated), each first material located in a corner **13** of one 3D pattern is connected with an adjacent corner **13** with a material line, when two adjacent corners are linked by a material line, they are connected. In **Fig. 3****,** one material line **15'** is represented, as an illustration, for linking two adjacent nodes of a same surface of the geometric form. As illustrated in **Fig. 3****,** the other material lines linking the adjacent nodes of a same surface are not represented, said material lines being full or hollow cylinders of the first material **16.**

According to one embodiment, the connections **15** have a full body with a cylindrical, oval, square, or rectangular cross section.

According to one embodiment, the connections **15** have a hollow body with an internal and external cross section of cylindrical, oval, square, or rectangular shape.

In one embodiment, some meshes comprise at least a connection with one of the first structure or the second structure of the damping element.

Any other arrangement of node connections defining a three-dimensional mesh **12** may be considered.

According to one embodiment, each 3D microstructure forms a polyhedron, two adjacent microstructures of the mesh structure being joined by at least one of their nodes **13.** The polyhedron allows the definition of many forms homothetic to that of atomic structures of crystals. These forms are interesting in particular from the point of view of the mechanical strength of the microstructure and therefore of the designed damping element **1** comprising such microstructures.

According to one embodiment, each microstructure is substantially a homeomorph of a crystalline atomic structure, the resulting form comprising at least one basic microstructure.

In one embodiment where the mesh comprises a plurality of 3D microstructures having nodes **13** and connections **15,** the filling rate is defined for one microstructure as the ratio of the volume occupied by the nodes **13** and the connections **15** to the remaining volume in the total volume of the microstructure, the total volume being defined as the volume enclosed within a surface obtained by connecting the nodes **13** of the microstructure itself.

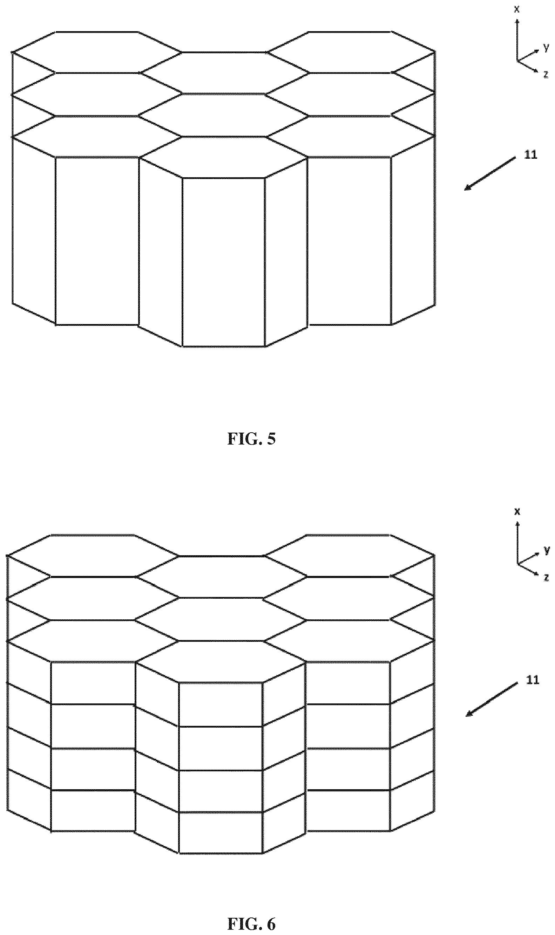

In one embodiment, the network comprises meshes forming an octahedral. In one embodiment illustrated in **Fig. 5** and **Fig. 6****,** the network comprises hexagonal walls defining a profile of a superior or an inferior side of the meshed structure. The junction between the meshed structure and the lower and/or the upper structure may be ensured by the hexagonal surface.

In one embodiment illustrated in **Fig. 4****,** the mesh comprises five nodes in a rectangular parallelepiped: two nodes are located in two opposite corners **13** of a same first face, one node is located at the center of the rectangular parallelepiped, and two nodes are located in the two opposite corners **13** of a same second face, said second face being opposite to the first face. This embodiment may be described by defining one node by edge of the rectangular parallelepiped. Each node located at a corner **13** of the rectangular parallelepiped is connected to the node located in the center **14** of the rectangular parallelepiped by a connection **15** comprising the first material **16.** The advantage is to provide, with this network, desired mechanical properties with an optimized weight and using a minimal material quantity.

In one embodiment, the geometric form surrounding a 3D pattern is a parallelepiped, a cube or a tetrahedron. Other geometric forms may be used in different embodiments of the invention.

Thus, a meshed structure **6** in which a microstructure is inscribed allows creating semihollow objects having predefined mechanical strength while being lighter than objects comprising a full material.

In one embodiment, illustrated in Fig. **5****,** the network of the meshed structure **6** comprises hexagonal meshes. In one embodiment, said hexagonal meshes are connected together by some nodes of their lateral side. In one embodiment, the hexagonal meshes present a hexagonal surface. In one embodiment, said hexagonal surface comprises six internal angles ranging from 55° to 65°, preferably from 58° to 62°. Said network allows an identical mechanical behavior of the meshed structure along the y direction and the z direction.

In one embodiment, the network of the meshed structure **6** comprises alveolar meshes.

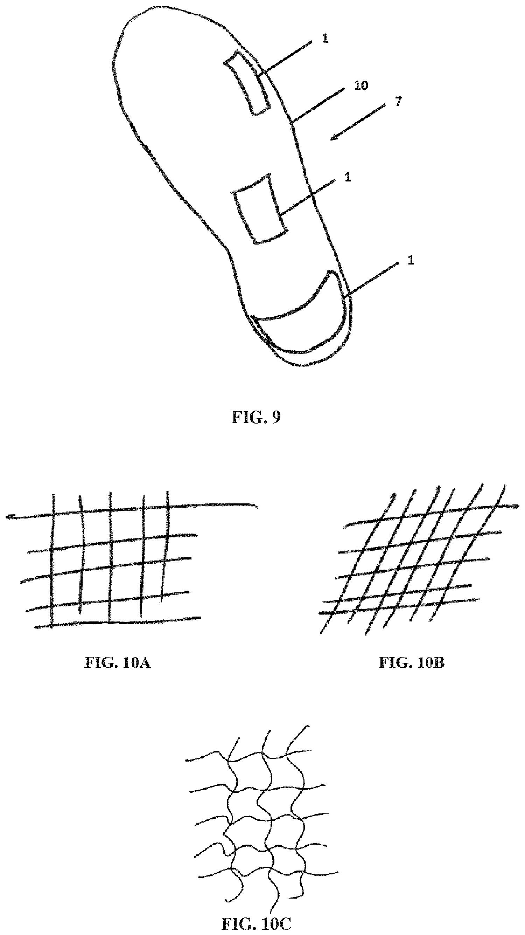

In one embodiment, the network of the meshed structure **6** comprises straight lines or rectilinear walls forming right angles **(****Fig. 10A****)** or forming angles different from 90° **(****Fig. 10B****).**

In one embodiment, the network of the meshed structure **6** comprises meshes having triangular sides.

In one embodiment, the network of the meshed structure **6** comprises meshes having octagonal sides. In a first example, the octagonal sides are the lateral sides. In another example, the octagonal sides are the superior and the inferior sides.

According to an alternative embodiment, the microstructures composing the mesh have random shapes, said random shapes being a geometrical shape or a non-geometrical shape. According to this embodiment, the mesh is not obtained by a repetition of identical microstructures.

In one embodiment illustrated in **Fig. 10C****,** the network of the meshed structure comprises a geometric form having wave lines or curved lines.

In one embodiment illustrated in **Fig. 5****,** the meshed structure **6** comprises a unique mesh layer in the thickness of the meshed structure. **Fig. 5** represents a hexagonal mesh structure comprising only one 3D pattern in the thickness of the meshed structure. **Fig. 6** represents a hexagonal mesh structure comprising only four 3D patterns in the thickness of the meshed structure.

In other embodiments, the network of the meshed structure **6** may comprise a plurality of meshes along the **x** direction, also called thickness direction, between the first structure **2** and the second structure **4.**

In one embodiment, the network of the meshed structure **6** comprises a plurality of meshes along the **y** and **z** directions.

In one embodiment, the hardness of the meshed structure **6** is ranging from 20 to 100 shore A, preferably from 30 to 100 shore A, preferably from 30 to 70 shore A, preferably from 40 to 70 shore A in an uncompressed state or de-energized state of the meshed structure **6,** in particular a state of the meshed structure **6** as obtained after its manufacturing, without any load being applied thereto.

As illustrated in **Fig 1** and **Fig. 2A****,** the meshed structure **6** is comprised between a first structure **2** forming an inferior surface **3** and a second structure **4** forming a superior surface **5.**

In one embodiment, the inferior surface **3** is the surface of the first structure **2** intended to be positioned in contact with or in front of the inferior layer of an insole **7** (i.e. opposite to the meshed structure **6**). In one embodiment, the superior surface **5** is the surface of the second structure **4** intended to be positioned in contact with or in front of the superior layer of an insole **7** (i.e. opposite of the meshed structure **6**).

In one embodiment, said inferior surface **3** and/or superior surface **5** are substantially plane surfaces. In one embodiment, said inferior surface **3** and/or superior surface **5** are defined by a perimeter. In one embodiment, said inferior surface **3** and/or superior surface **5** are continuous or uninterrupted inside said perimeter.

The advantage is that the inferior and/or superior surface improve the fixation of the damping element **1** on the inferior layer and on the superior layer of the insole **7** by increasing the contact surface between the surface of the damping element 1 and the layer.

In one embodiment, said superior surface **5** and/or said inferior surface **3** are flat surfaces or substantially flat surfaces.

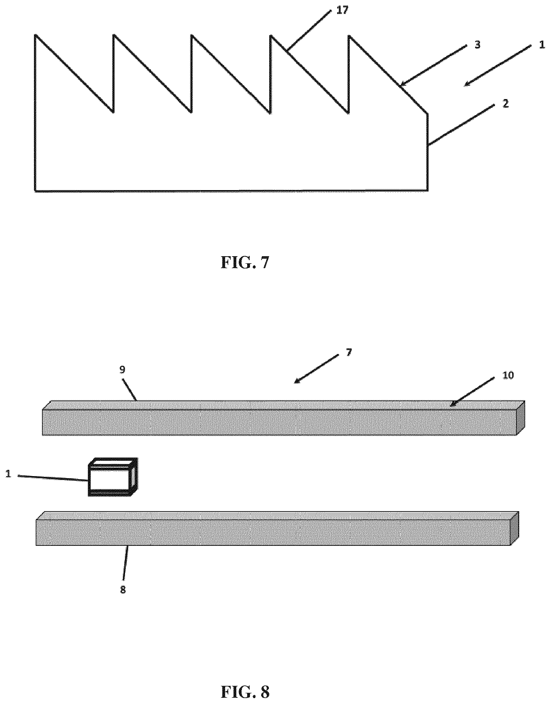

In one embodiment, illustrated in **Fig. 7****,** said inferior surface **3** is a flat surface comprising asperities or roughness **17.** **Fig. 7** is not drawn to scale. In one embodiment, the superior surface **5** is also a flat surface comprising asperities or roughness **17.**

The advantage of said asperities or said roughness **17** is double when the damping element **1** is fixed to an inferior layer and/or to a superior layer of an insole with adhesive. First, it increases the contact surface between the damping element **1** and the adhesive. Secondly, asperities or roughness **17** increases the resistance of the adhesive and the system damping element / adhesive / layer to shearing.

In one embodiment, the first structure **2** and/or the second structure **4** have a predefined thickness, said predefined thickness ranging from 0.1 mm to 5 mm.

In one embodiment, the first structure **2** and/or the second structure **4** comprise a thickness ranging from 0.1 mm to 5 mm.

In one embodiment, the damping element **1** further comprises a set of junctions structurally connecting the meshed structure **6** to the first structure **2.** In one embodiment, the damping element **1** further comprises a set of junctions structurally connecting the meshed structure **6** and to the second structure **4.**

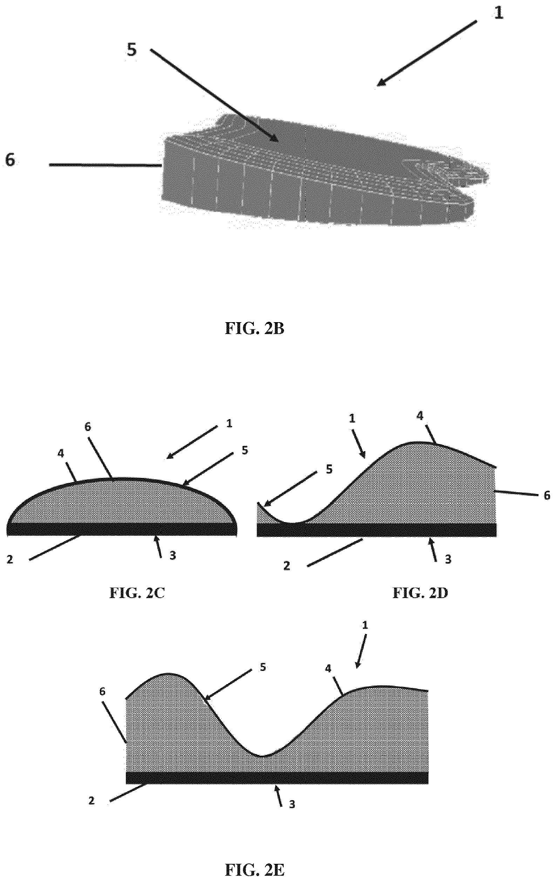

In one embodiment illustrated in **Fig. 1****,** the inferior surface **3** and the superior surface **5** are parallel. In another embodiment illustrated in **Fig. 2A** and **Fig. 2B****,** at least a portion of the superior surface **5** shows a slope with respect to the inferior surface **3.**

The advantage of a slope is to follow the shape of the foot of the user or to stimulate a specific muscle of the foot.

In one embodiment illustrated in **Fig. 2C, Fig 2D** and **Fig. 2E****,** at least a portion of the superior surface **5** comprises a curve.

In one embodiment illustrated in **Fig. 2C****,** the superior surface **5** is convex. In an alternative non-illustrated embodiment, the superior surface **5** is concave.

In one embodiment illustrated in **Fig. 2D****,** the superior surface **5** comprises a concave portion and a convex portion. In one embodiment illustrated in **Fig. 2E****,** the superior surface **5** comprises a concave portion surrounded by two convex portions.

In one embodiment, the inferior surface **3** is a flat surface, i.e. it does not comprise curve or step.

By "convex", it should be understood that a straight line segment that joins two points of a convex part of the superior surface **5** lies completely within the damping element **1.** By "concave", it should be understood that a straight line segment that joins two points on a concave part of the superior surface **5** lies outside the damping element **1.**

In one embodiment, the thickness of the first structure **2** and the thickness of the second structure **4** are insignificant compared to the thickness of the meshed structure **6.** In one embodiment, the ratio of the thickness of the meshed structure to the thickness of the second structure **4** is superior to 5, or superior to 10, or superior to 100.

In one embodiment, the ratio of the thickness of the meshed structure to the thickness of the first structure **2** is superior to 5, or superior to 10, or superior to 100.

In one embodiment, the ratio between the thickness of the meshed structure and the thickness of the first structure **2** and/or the second structure **4** is inferior to 200, or inferior to 150, or inferior to 100, or inferior to 80.

In one embodiment, the meshed structure **6** is made by 3D printing or an equivalent method.

According to one embodiment, the mesh structure **6** is manufactured by injection layer by layer of material from a 3D printer.

In one embodiment, the meshed structure **6,** the first structure **2** and the second structure **4** are made by 3D printing or an equivalent method. In one embodiment, the meshed structure **6,** the first structure **2** and the second structure **4** are made by 3D printing in a same monobloc part.

An advantage of the manufacturing method of the invention is that it offers a possibility of manufacturing each part of the damping element **1** in the same operation by means of a 3D printer. According to one possibility, the 3D printer injects material into the part forming the outer part of the damping element **1** and in particular into its thickness and injects a material to obtain the materialization of the mesh structure **6** composed by the microstructures.

Manufacturing a damping element **1** in a same monobloc part of material advantageously provides a wide range of hardness, reduces the quantity of material used, avoids the step of combining several materials with each other and further avoids subtractive process allowing a faster manufacturing step.

In one embodiment, the damping element **1** is positioned on or fixed to at least one layer of an insole **7,** said damping element **1** comprising:
- a first structure **2** forming at least one surface; and
- a meshed structure **6** in contact with or fixed to said surface;
said first structure **2** and said meshed structure **6** being designed in a same monobloc part.

The insole **7,** is configured to be inserted into a shoe. Said insole **7** illustrated in **Fig. 8** comprises a first inferior layer **8** and a second superior layer **9**; and at least two damping elements **1** being located between the first inferior layer **8** and the second superior layer **9.** The insole **7** comprises at least two damping elements **1** between the first inferior layer **8** and the second superior layer **9.**

In one embodiment, the first inferior layer **8** and the second superior layer **9** have the same periphery. In one embodiment, the dimensions of at least one of the first and the second layers is configured so that they cover the entire surface of the internal face of the shoe intended to support the foot of a user.

In one embodiment, the damping element **1** is configured to create a thickness in a predefined area of the insole. Said predefined area may be more than two times smaller than the total area of contact between the foot and the insole. In this embodiment, the damping element is configured to exert a localized pressure on a predefined area of the sole of the foot. Said predefined area of the sole of the foot is targeted by the physician. The use of a damping element creating a localized thickness in the insole has the advantage of allowing a localized action on one or more points of interest in the foot of the subject without inducing actions that may be undesired on the whole surface of the foot.

In one embodiment, the location of the at least one damping element **1** relative to the layers is configured to support the heel of the user.

The different damping elements may have hardness values different from one another, said difference being of at least 5 shore A, preferably at least 10 shore A. In one embodiment, the hardness of a damping element **1** is different from the hardness of the at least one layer of the insole **7,** said difference being of at least 5 shore A, preferably at least 10 shore A. The positioning at specific locations in the insole **7** of damping elements **1** having different hardness values contributes to the modulation of the hardness profile of the insole **7** itself.

A first damping element may be positioned between the first inferior layer **8** and the second superior layer **9** in a first region of the insole, whereas a second damping element is positioned in contact with the external surface of the first inferior layer **8** in a second region of the insole. In one embodiment, the first region and the second region are not overlapped.

A further advantage of using one or more damping elements at specific locations of the insole is that such a structure of the insole is more robust to structural damages of the mesh than an insole comprising a damping element along its whole surface. Indeed, the twists of the insole generated during walking, notably in correspondence of the metatarsal bones, create repetitive important stresses on the meshed structure in the metatarsal bone area, which with time causes its deterioration. In the present invention, the damping elements may be properly arranged in the insole so that the twists caused by walking are undergone by areas of the insole not comprising any damping element.

**Fig. 9****,** illustrates possible locations and shapes of damping elements **1** between the first inferior layer **8** and the second superior layer **9.**

In one embodiment, the first structure **2** of the damping element **1** is fixed to the first inferior layer **8.**

In one embodiment, the inferior surface **3** formed by the first structure **2** is fixed to the first inferior layer **8.** In one embodiment, the first structure **2** is adhered to the first inferior layer **8.**

In one embodiment, the superior surface **5** formed by the first structure **4** is fixed to second superior layer **9.** In one embodiment, the second structure **4** is adhered to the second superior layer **9.**

One advantage of the inferior surface **3** and the superior surface **5** is to improve the fixation or the adhesion between the damping element **1** and the first inferior layer **8** and the second superior layer **9.**

Indeed, the meshed structure **6** comprise a succession of air or voids decreasing the contact surface. The adhesion of the meshed structure **6** directly to a layer is not improved because of the weak contact surface.

Therefore, the inferior surface **3** and the superior surface **5** advantageously ensure a better fixation of the damping element **1** to the layers. This reinforcement of this fixation allows offering a more resistant insole **7** during walking.

Indeed, when walking, the foot inside the shoe continuously generates a compression force and a shear force to the insole **7.** The reinforcement of the fixation between a layer and the dumping element allows improving the durability and the efficiency of the insole **7.** Indeed, a displacement of the damping element **1** relative to the foot of the user will cause an unchosen effect leading to an inefficiency of the insole **7.**

Another advantage of the inferior surface **3** is to protect the inside of the shoe from the damping element **1.** In one embodiment, the first inferior layer **8** comprises a resin, in particular a thermoplastic resin.

Another advantage of the second superior layer **9** is to protect the foot of the user from the damping element **1.** In one embodiment, the second superior layer **9** comprises a superior surface **10** intended to be directed toward or in contact with a foot of a user. In one embodiment, the superior surface **10** of the superior layer comprises a material chosen among biocompatible materials.

By "biocompatible", it should be understood the capability of the material to exist in harmony with the skin without causing deleterious change. In one embodiment, "biocompatible" refers to a property of a material of not inducing toxic or injurious effects.

In one embodiment, the superior surface **10** of the second superior layer **9** comprises plastic material or leather.

The three-dimensional damping elements **1** for an insole **7** are modelled.

In one embodiment, the generated model is intended to be transmitted to a 3D printer to produce a damping element **1.** In one embodiment, the manufacturing of the damping element **1** is made by a 3D printer from a set of information. In one embodiment, the generated model is made from said set of information provided by the podiatrist with a user interface.

This method advantageously provides an efficient manufacturing of a damping element **1,** decreasing the duration of the production. Furthermore, the podiatrist is free to define which properties are set as fixed values and which properties are defined as parameters in the optimization process for shaping the damping element. The optimization process allows automatically determining the final shape of the damping element according to some input values as for instance: a mechanical constraint applied on the insole on a specific location, an activation of a specific muscle located in the body, etc.

Furthermore, the podiatrist may configure the properties of a damping element **1** or the intended location of a damping element **1** between two layers of the insole **7.**

The method comprises the step of receiving a set of information. In one embodiment, said set of information concerning the damping element **1** to be modeled comprises geometric data and hardness data.

In one embodiment, geometric data comprise data defining the profile, shape and/or the dimensions of the damping element **1.** The profile may be defined in two or three dimensions.

In one embodiment, geometric data comprise a geometric object in two dimensions. In one embodiment, said geometric data comprise the surface of at least one face of the damping element **1.**

In one embodiment, geometric data comprise a geometric shape in two dimensions. In one embodiment, geometric data comprise a geometric shape in two dimensions and at least one dimension of said surface in one of the two dimensions.

In one embodiment, geometric data comprise a 3-dimensional homothetic geometric object and a value corresponding to the scale of the said object.

In one embodiment, geometric data comprise a set of points and lines connecting said points in a closed chain defining a surface.

In one embodiment, the geometric data further comprise the thickness of said damping element **1.** In one embodiment, the thickness of said damping element **1** is measured perpendicularly to the surface of the at least one face. In one embodiment, the geometric data comprise the thickness of the damping element **1** in at least one point (i.e. in a third dimension).

In one embodiment, geometric data comprise the variations of the thickness on a predefined region between both sheets. In one embodiment, the geometric data comprise a set of some reference values of the thickness, for example defined in different points of each surface of the superior structure, i.e. the superior surface, and the inferior structure, i.e. the inferior surface.

In one embodiment, the inferior surface **3** and the superior surface **5** of the damping element **1** are parallel and the thickness is constant.

In one embodiment, geometric data comprise a slope of the second sheet with respect to the first sheet. In one embodiment, geometric data comprise the thickness in at least one point and slope data. In one embodiment, slope data comprise a slope steepness, a direction of said slope, a length of the slope, a starting point of the slope and / or an ending point of the slope.

In one embodiment, slope data further comprise:
- a starting point or a starting line of a slope;
- an ending point or an ending line of the slope.

In one embodiment, the set of information is received by means of a user interface. In one embodiment, geometric data are received by means of a user interface. In another embodiment, the set of information is saved in a memory which can be connected to a computer having a user interface.

In one embodiment, the user interface comprises a portion wherein it could be represented a two-dimensional, or a three-dimensional, object drawn by the podiatrist on a pad. In one embodiment, the geometric data include said two-dimensional object drawn by the podiatrist drawn.

In one embodiment, the user interface is configured to display on a screen at least one working window. For example, a first working window may comprise a graphical representation of a damping element while a second working window may comprise displaying of geometric data or hardness data. The user interface may further comprise interactive means for the insertion of data or to zoom in and out, scroll or rotate the damping element graphical representation.

The set of information further comprise at least a hardness data. In one embodiment, said hardness data is the hardness of a material. In one embodiment, said hardness data is expressed in the shore scale or in the Vickers scale. In one embodiment, said hardness data is intended to determine the hardness of the meshed structure **6** or of the damping element **1.**

The method comprises a first three-dimensional modeling of a first three-dimensional structure from said geometric data. Said first three-dimensional structure forms a first sheet and a second sheet defining a first volume. The first volume is defined in a region located between the two sheets. It is considered as a first interior volume.

In one embodiment, the first sheet and the second sheet correspond to the first structure **2** forming an inferior surface **3** and the second structure **4** forming a superior surface **5** of a damping element **1.** The first modeling may include all the geometrical embodiments of the inferior surface **3** and the superior surface **5** described above.

In one embodiment, the first sheet and the second sheet are not in contact one each other. In one embodiment, the first sheet and the second sheet may comprise a common line at their junction. In one embodiment, the distance between the first and the second sheet is function of the thickness received in geometric data of the set of information.

In one embodiment, the first sheet and the second sheet are parallel. In another embodiment, at least a portion of the first sheet shows a slope with respect to the second sheet on at least a portion. The orientation, the length, the value of the slope of the first sheet with respect to the second sheet is defined by the received set of information or by received geometric data.

In one embodiment, the first interior volume is defined by the edges of said first sheet and second sheet. In one embodiment, the first sheet, the second sheet and the connecting lines between the edges of the first sheet and the edges of the second sheets define the first interior volume.

The method comprises a second three-dimensional modeling of a second three-dimensional meshed structure configured to occupy the first interior volume.

In one embodiment, the volume of the second three-dimensional structure is the first interior volume.

The second three-dimensional meshed structure is the meshed structure **6** of a damping element **1.** The second three-dimensional meshed structure may include all the embodiment described above for the meshed structure **6.**

In one embodiment, the second three-dimensional meshed structure comprises a network of meshes.

At least four parameters of the second three-dimensional meshed structure is determined by a computer from the geometric data and the hardness data.

One parameter is the mesh type. Mesh types have been described above. In one embodiment, the mesh type is the 3D pattern and the geometric form. For example, a mesh type illustrated in **Fig. 3** leads to a structure which have a higher hardness value than a structure constituted of a mesh type illustrated in **Fig. 4****.**

One parameter is the mesh arrangement. For example, a unique mesh layer in the thickness of the meshed structure (or in the x direction illustrated in **Fig. 5**) or a plurality of meshes along the thickness direction lead to different values of hardness of the damping element.

One parameter is the mesh size or the density of meshes per volume unit. Indeed, a high density of meshes, and therefore a low meshes size leads to increase the hardness of a structure.

One parameter is the filling rate. Indeed, for the same mesh type, mesh arrangement, mesh size and mesh density, increasing the filling rate (e.g. by increasing the thickness of the connection **15** between the nodes of a network) leads to increase the hardness of the structure.

In a preferred embodiment, mesh type, mesh arrangement, mesh size, and mesh density are predefined by a computer and the filling rate are computed from the received hardness data and / or geometric data.

In one embodiment, the at least one parameter is determined by a computer from received hardness data and / or geometric data of the set of information. In one embodiment, said at least parameter is advantageously determined by a computer in such a way that the modeled damping element **1** reach the targeted hardness.

In one embodiment, hardness data comprise a variation of the hardness value depending of the point of the damping element **1** to be modeled. Then, said at least one parameter vary inside the damping element **1** to be modeled.

In one embodiment, said parameters are also determined at least in part from the thickness of the first sheet and / or from the thickness of the second sheet of the first three-dimensional structure modeled.

In one embodiment, the parameters are also determined at least in part from the space between the first sheet and the second sheet of the first three-dimensional structure.

In one embodiment, said parameters are also determined at least in part from a slope of the second sheet with respect to the first sheet and inversely.

The advantage is that the hardness of the damping element **1** produced with said modelling is not depending only of the used material. Then, the same material can be used to produce damping elements **1** having a large range of hardness.

The second three-dimensional modeling of a second three-dimensional meshed structure is generated at least by means of the four estimated parameters: mesh type, mesh arrangement, mesh size, density in combination with at least one parameter selected among: filling rate; a thickness of the first sheet; the thickness of the second sheet of the first structure; the distance between the first and the second sheet of the first three-dimensional structure; and/or a slope of the second sheet with respect to the first sheet.

In one embodiment, the hardness of the damping element **1** produced with said modeling ranging from 20 to 100 shore A in its uncompressed state or in its de-energized.

In one embodiment, the method further comprises the step of generating a three-dimensional model of the damping element **1** to be designed comprising:
the first three-dimensional modeling;
the second three-dimensional modeling;
a modeling of a set of junctions structurally connecting the first three-dimensional structure of the first three-dimensional modeling to the second three-dimensional meshed structure of the second three-dimensional modeling.

The method comprises the step of generating a three-dimensional modeling of the damping element **1** to be designed comprising the modeling of:
- the first three-dimensional structure modeled forming a first and a second sheet defining a first interior volume;
- the second three-dimensional meshed structure modeled in the first interior volume of the first three-dimensional structure; and
- a set of junctions structurally connecting the first three-dimensional structure to the second three-dimensional meshed structure.

In one embodiment, the three-dimensional modeling comprising the first three-dimensional modeling, the second three-dimensional modeling and a modeling of a set of junctions structurally connecting the first three-dimensional structure to the second structure **4.**

In one embodiment, said generated three-dimensional modeling can be send to a 3D printer.

In one embodiment, the method further comprises the step of transmitting the said generated three-dimensional modeling to a three-dimensional printer.

In one embodiment, the method further comprises a step of printing a damping element **1** for an insole **7** comprising; modeling a three-dimensional modeling of the damping element **1** to be designed according to the method described above; converting said three-dimensional modeling into a file readable by a 3D printer; transmitting said file to a 3D printer; and printing the damping element **1** from the file comprising the three-dimensional modeling. In one embodiment, said method further comprising the step of transmitting the converted file to a 3D printer.

In one embodiment, the term "printing the damping element" encompassed the manufacturing of the damping element **1** by 3D printing as defined in the present application.

In one example, the geometrical data may comprise at least the number of damping elements and, for each damping element, the desired specific location in the insole, the shape and the dimensions. Said geometrical data may be inserted through a graphical interface which allows the user to draw a damping element, thus determining the shape and dimensions of the damping element with respect to the dimensions of the sole of the foot of a user, and its positioning in the insole. The geometrical data may further comprise the ratio between the thickness of the meshed structure and the thickness of the first structure **2** and/or the second structure **4.** The graphical interface may allow as well the insertion of geometrical information such as the thickness of the damping element, the slope of the second sheet with respect to the first sheet, etc. The graphical interface further allows the insertion of a hardness value for each dumping element. In this example, the method comprises a step of selection of the appropriate meshed structure for each input hardness. Said step may be performed using at least one table of correspondence comprising configuration data for selecting a mesh type, mesh arrangement, mesh size, density and filling rate. The configuration data are associated to at least one hardness value. The table of correspondence may further comprise a type of material. The configuration data comprised in the table of correspondence are defined to obtain optimized damping elements. The geometrical data and the optimal configuration data are used to model a first three-dimensional structure and a second three-dimensional meshed structure configured to occupy the first interior volume. The method comprises a further step of generating a three-dimensional model of the damping element comprising the first and second three-dimensional structures. The method comprises a step of including in the three-dimensional model a set of junctions structurally connecting the first three-dimensional structure to the second three-dimensional meshed structure. Such 3D model may be outputted in the form of a file comprising readable instructions for a 3D printer (e.g. STL file).

According to one embodiment, the step of modeling a damping element for an insole is a computer-implemented method.

While various embodiments have been described and illustrated, the detailed description is not to be construed as being limited hereto. Various modifications can be made to the embodiments by those skilled in the art without departing from the scope of the protection as defined by the claims.

### REFERENCES

1 - Damping element
2 - First structure
3 - Inferior surface
4 - Second structure
5 - Superior surface
6 - Meshed structure
7 - Insole
8 - First inferior layer
9 - Second superior layer
10 - Superior surface of the second superior layer
11 - Three-dimensional network
12 - Three-dimensional mesh
13 - Corner of a rectangular parallelepiped
14 - Center of the rectangular parallelepiped
15 - Connection
15' - Material line
16 - First material
17 - Roughness

## Claims

1. Method for manufacturing an insole (7) comprising a first inferior layer (8), a second superior layer (9) and at least two damping elements (1) between the first interior layer (8) and the second superior layer (9),
wherein the at least two damping elements (1) are modelled by:
- receiving a set of information of the at least two damping elements (1) to be modeled, comprising geometric data and hardness data;
- modeling a first three-dimensional structure from said geometric data, said first three-dimensional structure forming a first sheet and a second sheet defining a first interior volume;
- estimating from said geometric data and hardness data four parameters of a second three-dimensional meshed structure configured to occupy the first interior volume, wherein the four parameters are mesh type, mesh arrangement, mesh size and mesh density;
- modeling the second three-dimensional meshed structure configured to occupy the first interior volume, said second three-dimensional meshed structure being generated at least by means of the four estimated parameters: mesh type, mesh arrangement, mesh size and mesh density, in combination with at least one parameter selected among: filling rate, a thickness of the first sheet, a thickness of the second sheet of the first three-dimensional structure, space between the first sheet and the second sheet of the first three-dimensional structure, or a slope of the second sheet with respect to the first sheet of the first three-dimensional structure;
- generating a three-dimensional model of the at least two damping elements (1) comprising the first and the second three-dimensional structures and a set of junctions structurally connecting the first three-dimensional structure to the second three-dimensional meshed structure.

2. Method according to claim **1,** wherein the geometric data comprise:
- a geometric shape in two dimensions of the first sheet and/or of the second sheet; and/or
- a thickness of the at least two damping elements (1) to be modeled in at least one point; and/or
- a slope of the second sheet with respect to the first sheet.

3. Method according to any one of claim **1** or **2,** wherein the set of information is received by means of a user interface.

4. Method of any one of claims **1** to **3** further comprising a step of printing the at least two damping elements (1) for the insole (7), the step of printing the at least two damping elements (1) comprising:
- converting the three-dimensional model into a file readable by a 3D printer; and
- printing the at least two damping elements (1) from the file comprising the three-dimensional model.

## Patentansprüche

1. Verfahren zur Herstellung einer Einlegesohle (7), die eine erste untere Schicht (8), eine zweite obere Schicht (9) und mindestens zwei Dämpfungselemente (1) zwischen der ersten unteren Schicht (8) und der zweiten oberen Schicht (9) umfasst, wobei die mindestens zwei Dämpfungselemente (1) modelliert werden durch:
- Empfangen eines Satzes von Informationen über die mindestens zwei zu modellierenden Dämpfungselemente (1), die Geometriedaten und Härtedaten umfassen;
- Modellieren einer ersten dreidimensionalen Struktur aus den Geometriedaten, wobei die erste dreidimensionale Struktur ein erstes Blech und ein zweites Blech bildet, die ein erstes Innenvolumen definieren;
- Schätzen von vier Parametern einer zweiten dreidimensionalen Struktur aus Masche, die so konfiguriert ist, dass sie das erste Innenvolumen einnimmt, aus den Geometriedaten und Härtedaten, wobei die vier Parameter Maschentyp, Maschenanordnung, Maschengröße und Maschendichte sind;
- Modellierung der zweiten dreidimensionalen Struktur aus Masche, die so konfiguriert ist, dass sie das erste Innenvolumen einnimmt, wobei die zweite dreidimensionale Struktur aus Masche mindestens mit Hilfe der vier geschätzten Parameter Maschentyp, Maschenanordnung, Maschengröße und Maschendichte in Kombination mit mindestens einem Parameter erzeugt wird, der ausgewählt wird aus: Füllrate, Dicke des ersten Bleches, Dicke des zweiten Bleches der ersten dreidimensionalen Struktur, Abstand zwischen dem ersten Blech und dem zweiten Blech der ersten dreidimensionalen Struktur oder Neigung dem zweiten Blech in Bezug auf dem ersten Blech der ersten dreidimensionalen Struktur;
- Erzeugen eines dreidimensionalen Modells der mindestens zwei Dämpfungselemente (1), das die erste und die zweite dreidimensionale Strukturen und einen Satz von Verbindungsstellen umfasst, die die erste dreidimensionale Struktur strukturell mit der zweiten dreidimensionalen Struktur aus Masche verbinden.

2. Verfahren nach Anspruch **1,** wobei die Geometriedaten umfassen:
- eine geometrische Form in zwei Dimensionen des ersten Blechs und/oder des zweiten Blechs; und/oder
- eine Dicke der mindestens zwei zu modellierenden Dämpfungselemente (1) in mindestens einem Punkt; und/oder
- eine Neigung des zweiten Bleches in Bezug auf dem ersten Blech.

3. Verfahren nach einem der Ansprüche **1** oder **2,** wobei der Satz von Informationen mittels einer Benutzerschnittstelle empfangen wird.

4. Verfahren nach einem der Ansprüche **1** bis **3,** ferner umfassend einen Schritt des Druckens der mindestens zwei Dämpfungselemente (1) für die Einlegesohle (7), wobei der Schritt des Druckens der mindestens zwei Dämpfungselemente (1) umfasst:
- Konvertieren des dreidimensionalen Modells in eine Datei, die von einem 3D-Drucker gelesen werden kann; und
- Drucken der mindestens zwei Dämpfungselemente (1) aus der Datei mit dem dreidimensionalen Modell.

## Revendications

1. Procédé de fabrication d'une semelle intérieure (7) comprenant une première couche inférieure (8), une seconde couche supérieure (9) et au moins deux éléments amortisseurs (1) entre la première couche intérieure (8) et la seconde couche supérieure (9),
dans lequel les au moins deux éléments amortisseurs (1) sont modélisés par :
- réception d'un ensemble d'informations sur les au moins deux éléments amortisseurs (1) à modéliser, comprenant des données géométriques et des données de dureté ;
- modélisation d'une première structure tridimensionnelle à partir de ces données géométriques, cette première structure tridimensionnelle formant une première feuille et une deuxième feuille définissant un premier volume intérieur ;
- estimation, à partir de ces données géométriques et de ces données de dureté, de quatre paramètres d'une deuxième structure tridimensionnelle maillée configurée pour occuper le premier volume intérieur, les quatre paramètres étant un type de maille, une disposition des mailles, une taille des mailles et une densité des mailles ;
- modélisation de la deuxième structure tridimensionnelle maillée configurée pour occuper le premier volume intérieur, ladite deuxième structure tridimensionnelle maillée étant générée au moins au moyen des quatre paramètres estimés : le type de maille, la disposition des mailles, la taille des mailles et la densité des mailles, en combinaison avec au moins un paramètre choisi parmi : un taux de remplissage, une épaisseur de la première feuille, une épaisseur de la deuxième feuille de la première structure tridimensionnelle, un espace entre la première feuille et la deuxième feuille de la première structure tridimensionnelle, ou une pente de la deuxième feuille par rapport à la première feuille de la première structure tridimensionnelle ;
- génération d'un modèle tridimensionnel des au moins deux éléments amortisseurs (1) comprenant les première et deuxième structures tridimensionnelles et un ensemble de jonctions reliant structurellement la première structure tridimensionnelle à la deuxième structure tridimensionnelle maillée.

2. Procédé selon la revendication **1,** dans lequel les données géométriques comprennent :
- une forme géométrique en deux dimensions de la première feuille et/ou de la deuxième feuille ; et/ou
- une épaisseur des au moins deux éléments amortisseurs (1) à modéliser en au moins un point ; et/ou
- une pente de la deuxième feuille par rapport à la première feuille.

3. Procédé selon l'une quelconque des revendications **1** ou **2,** dans lequel l'ensemble des informations est reçu au moyen d'une interface utilisateur.

4. Procédé selon l'une quelconque des revendications **1** à **3,** comprenant en outre une étape d'impression des au moins deux éléments amortisseurs (1) pour la semelle intérieure (7), l'étape d'impression des au moins deux éléments amortisseurs (1) comprenant :
- conversion du modèle tridimensionnel en un fichier lisible par une imprimante 3D ; et
- impression des au moins deux éléments amortisseurs (1) à partir du fichier comprenant le modèle tridimensionnel.
